# EUROPEAN PATENT APPLICATION

(11) **EP 0 977 453 A2**
(43) Date of publication of application: **02.02.2000**
(21) Application number: 99401635.0
(22) Date of filing: 01.07.1999
(51) Int. Cl.: H04Q 7/38

(54) **Channel selection method in a CDMA telecommunications system**

(30) Priority: 28.07.1998 ES 9801599
(71) Applicant: ALCATEL, 75008 Paris (FR)
(72) Inventor: Perez Gordillo, Francisco Javier, 28804 Alcala de Henares, Madrid (ES)
(74) Representative: Feray, Valérie

(57) **Abstract**

The present invention relates to a method for selection of a communication channel between a terminal and a base station in a Code Division Multiple Access (CDMA) system. The method is characterised by a selection stage of an uplink carrier signal among a group of at least two uplink carrier signals, for transporting data relative to a communication from the terminal to the base station, as a function of the power of a signal received by the terminal from the base station.

## Description

### OBJECT OF THE INVENTION

The present invention relates to a method for allocating a channel in a CDMA (Code Division Multiple Access) radiocommunications system which comprises a base station and terminals which can be fixed or mobile. In the present description, the phrase "CDMA code(s)" means a pseudo-random code, a Walsh code or any other code used in CDMA technology, which permits the spreading of the spectrum of the original signal to be transmitted. In CDMA, spreaders are employed to spread the spectrum of the base band signal, said signal being multiplied by a CDMA code. In the description that follows, the term despreader and associated words refer to the reverse function, i.e. the function of decoding the base band signal from the spread spectrum signal.

### STATE OF THE ART

The state of the art described in the book: "Wireless Digital Communications: Modulation and Spread-Spectrum Applications" (incorporated in the present application by reference) by Dr. Kamilo FEHER, published by Prentice-Hall PTR, 1995, poses in section 6.5.2, page 309, the problem of the "Near-Far Interference" in a CDMA system. The problem posed is that of the interference between the signals transmitted respectively by two terminals to the base station. Consequently, the capability of the base station to distinguish between two signals sharing the same spectrum is greatly affected by the power characteristic of these signals. If these two signals do not reach the base station with similar power, a loss in the capacity of the system will be produced. This appears as a problem of major importance in CDMA, because the signals are simultaneously sharing the same spectrum. This problem is typically overcome with a power control process of the signals transmitted by the terminals. Nevertheless, the effectiveness of this process is limited due to the reaction time required for regulating the power, due to the lack of precision in the power regulation, and especially due to the required dynamic range, thus implying a risk of loss of communications and a limited spectral efficiency.

### CHARACTERISATION OF THE INVENTION

A first object of the present invention is to provide a method that resolves efficiently the problem of the "Near-Far Interference". A second object of the present invention is to propose a base station for carrying out the method. Another object of the present invention is to define a terminal for carrying out said method. Other advantages and objects of the present invention are to be found in the following description.

Consequently, a method for selecting a communications channel for setting up a communication between a terminal and a base station of a Time and Code Division Multiple Access (TDMA/CDMA) system is characterised by a selection stage of a time slot among a group of at least two time slots of an uplink frame, for transporting data relative to said communication from said terminal to said base station, as a function of the power of a signal received by said terminal from said base station.

The terminal can comprise:
- means for measuring the power of a signal received from said base station, and
- means for selecting a time slot for transmitting data as a function of the power measured of the carrier signal received from said base station.

According to another alternative, a method for selecting a communications channel for setting up a communication between a terminal and a base station in a Code Division Multiple Access (CDMA) system, is characterised by a selection stage of an uplink carrier signal among a group of at least two uplink carrier signals, for transporting data relative to a communication from said terminal to said base station, as a function of the power of a signal received by said terminal from said base station.

The method can comprise a transmission stage from the terminal to the base station on the selected carrier signal of signalling data for setting up the call.

A terminal for carrying out the method is characterised in that it comprises:
- means for measuring the power of a signal received from the base station,
- means for selecting an uplink carrier signal as a function of the power measured of the carrier signal received from the base station, and
- means for transmitting to the base station on the selected carrier signal the signalling data for setting up the call.

For example, the selection means comprise a table that associates a carrier signal with a power range, respectively, from a plurality of power ranges.

A base station for carrying out the method is characterised in that it comprises duplicate radio and signal processing resources for processing signals received on each of the uplink carrier signals, and means for selecting the outputs of the spread spectrum despreaders that form part of the signal processing resources as a function of call set-up signalling data received from the terminal.

For example, the selection means comprise a control unit which receives, through CDMA code spread spectrum despreaders, the signalling data sent by different terminals on the different uplink carrier signals, respectively, and a selector controlled by said control unit which selects outputs of the spread spectrum despreaders with CDMA code modulated subscriber traffic signals which are received on all uplink carrier signals, as a function of the signalling data.

### BRIEF DESCRIPTION OF THE FIGURES

A more detailed explanation of the present invention is provided in the following description, based on the attached figures, in which:
- figure 1 shows a cell in a radiocommunications system and the associated telecommunications equipment;
- figure 2 shows a block diagram of a transmitter of a base station according to the state of the art;
- figure 3 shows a block diagram of a receiver of a base station according to the state of the art;
- figure 4 shows a block diagram of a receiver of a base station according to the present invention;
- figure 5 shows a block diagram of a terminal according to the present invention;
- figure 6 shows a block diagram of a transmitter of a base station according to a second alternative of the present invention; and
- figure 7 shows a block diagram of a terminal according to a second alternative of the present invention.

### DESCRIPTION OF THE INVENTION

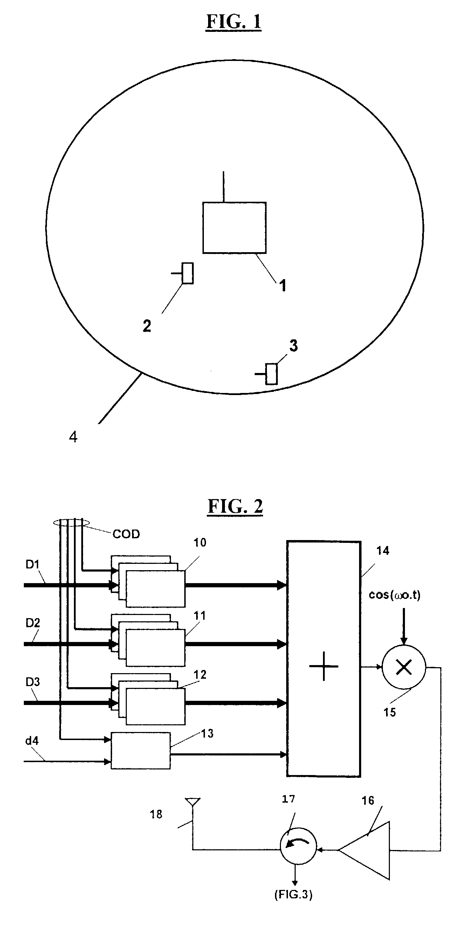

With reference to figure 1, a base station 1 defines a zone of radio coverage 4 within which terminals 2 and 3 communicate with the base station 1. The zone of coverage can adopt different shapes, for example a circular cell, an angular sector, etc.

The terminals 2, 3 are distributed in the cell 4, one of them 3 being located at a distance from the base station relatively greater than the other terminal 2. As a result of this geographical distribution of the terminals, a power control process cannot perfectly resolve the problem of the "Near-Far Effect Interference". For example, during the initial regulation of the power emitted by a terminal located at a relatively large distance from the base station, all the terminals located at a short distance from the base station will have a negative effect on the signal of this terminal.

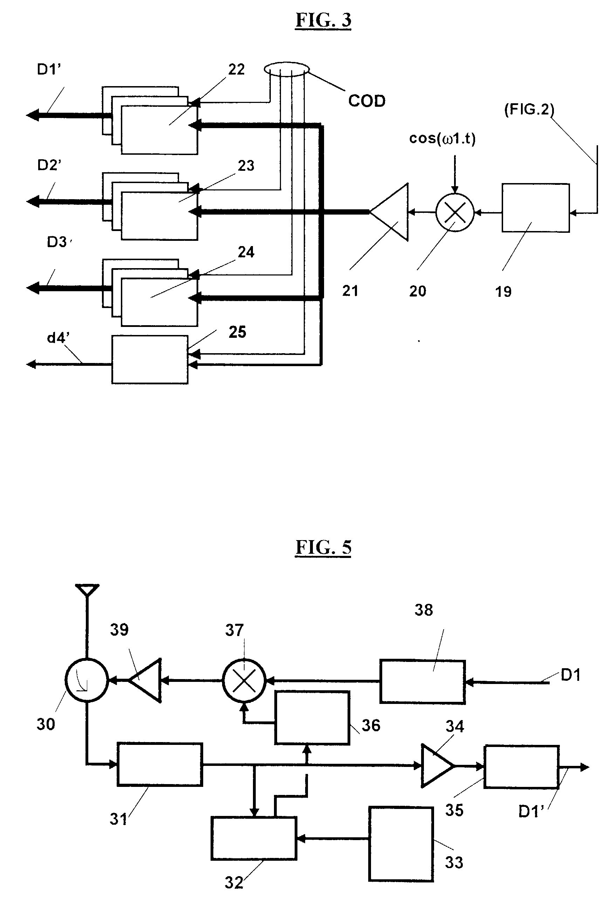

With reference to figure 2, a spread spectrum CDMA transmitter of a base station according to the state of the art comprises, according to a preferred embodiment, N = 3 sets of spread spectrum spreaders each one having M = 3 spread spectrum spreaders each receiving a CDMA family of codes or spectrum spreading codes COD and data D1, D2 or D3. Arrow d4 represents the broadcast signalling data. The M = 3 spread spectrum spreaders spread the spectrum of a subscriber traffic signal, a power control signal and a signalling signal associated with the subscriber traffic signal, respectively. A spread spectrum spreader 13 spreads a general signalling signal for transporting data to all terminals. An embodiment of a spread spectrum spreader is described, for example, in section 6.2, page 286, of the book "Wireless Digital Communications: Modulation and Spread-Spectrum Applications" (incorporated in the present application by reference) by Dr. Kamilo FEHER, published by Prentice-Hall PTR, 1995. An adder 14 sums the different output signals from each spread spectrum spreader of each set 10, 11, 12 and from spread spectrum spreader 13 for generating a resultant signal. This resultant signal is applied to an input of a multiplier 15 which multiplies the resultant signal by a carrier cos(ωₒt). The output modulated signal of the multiplier 15 is amplified by an amplifier 16 and is applied to a transmitting antenna 18 through a duplexor 17.

With reference to figure 3, a receiver of a base station 1 according to the state of the art comprises a reception filter 19, a demodulation multiplier 20, an automatic gain control device 21 and N = 3 sets of M = 3 spread spectrum despreaders 22, 23, 24 and a spread spectrum despreader 25. Arrow d4' represents the signalling data.The input signals are received at the input to the filter 19 (figure 3) via the antenna 18 and the circulator 17 (figure 2). The multiplier translates the input signals into base band. The base band signals are applied to the automatic gain control device 21, the output of which is applied to each of the N x M + 1 = 9 + 1 spread spectrum despreaders. The M = 3 spread spectrum despreaders of each set despread the spectrum of a subscriber traffic signal, a power control signal and a signalling signal associated with the subscriber traffic signal, respectively. The spread spectrum despreader 25 despreads a general signalling signal which transports subscriber traffic generated by any terminal 2, 3.

Typically, a spread spectrum despreader known in the state of the art comprises a device for acquisition and tracking of CDMA code synchronisation and phase/frequency synchronisation, a "RAKE filter" that locates in time the signals over multiple paths and an actual spread spectrum despreader which multiplies the received signal by synchronised PN sequences for the different multiple paths. A spread spectrum despreader is described, for example, in the USA patent US-A-5.694.467 incorporated in the present application by reference.

### FIRST ALTERNATIVE - CDMA/FDMA SYSTEM (CDMA SYSTEM)

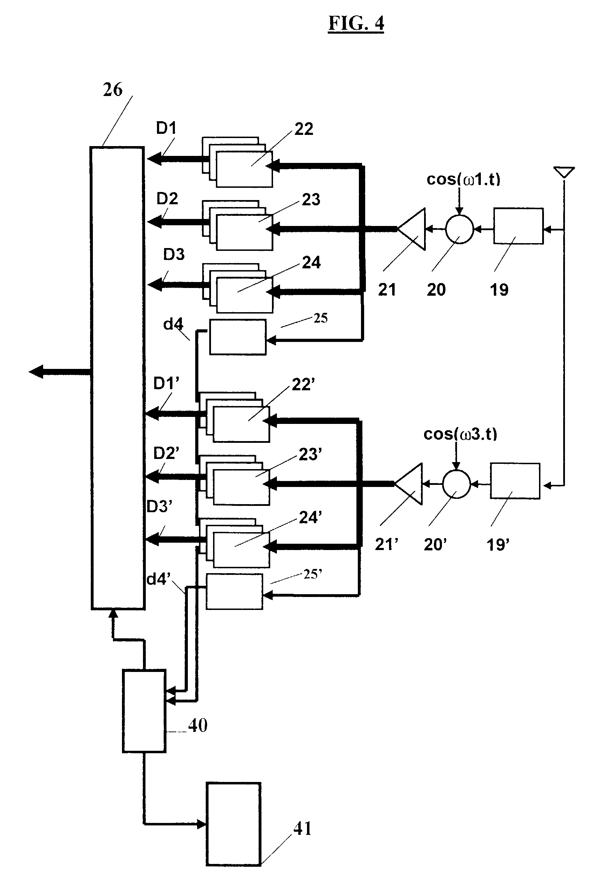

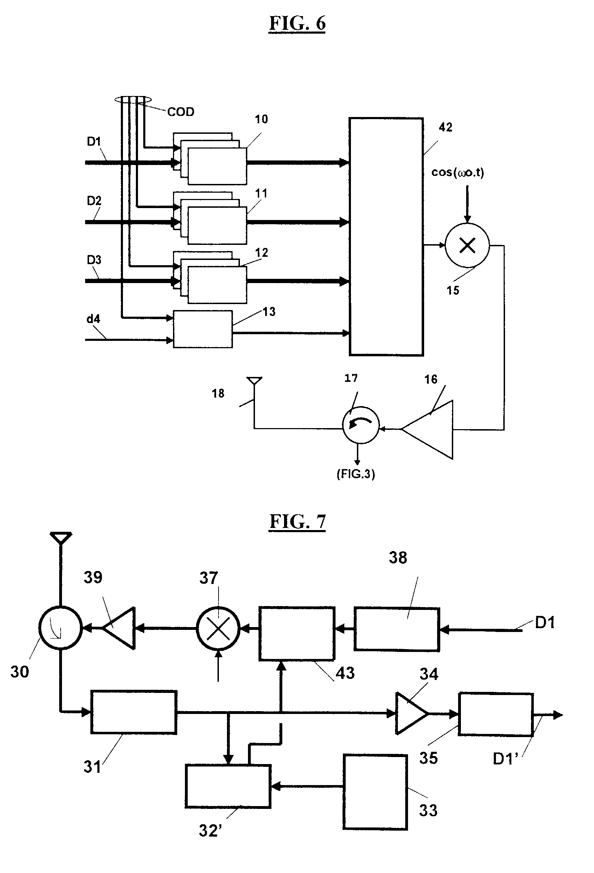

According to a first alternative of the present invention, figures 4 and 5 show, respectively, a receiver of a base station and a terminal according to the present invention. With reference to figure 5, a terminal 2, 3 according to the invention comprises, in the transmitting chain, a set of spread spectrum spreaders 38 which multiply the subscriber traffic, the power control and the signalling signals D1 to be transmitted by three sequences or CDMA codes, respectively; a multiplier 37 which multiplies the spread spectrum signals by a carrier signal; and an amplifier 39 and a duplexor 30 which makes possible the use of one single antenna. The receiving chain comprises a reception filter 31, an automatic gain control device 34, a set of spread spectrum despreaders 35, a power measurement and carrier selection device 32, a correspondence table 33 and a carrier signal generator 36.

The device 32 measures the power of the output signal of the reception filter 31 received from the base station 1 and centred on ωₒ, which corresponds to the transmitting frequency of the base station 1. The table 33 establishes a correspondence between different ranges of power measured and carrier signals, respectively. For example, the table 33 establishes the following correspondences:
- in the range from P₀ to P₁ → ω₁, and
- in the range from P₁ to P₂ → ω₃,
where P₀, P₁ and P₂ are increasing power values and ω₁, ω₃ are two values of angular velocity of the transmitting carrier from the terminal 2, 3. As a function of the power measured by the device 32, and of the value of angular velocity that corresponds to this measured power value, said device 32 applies a carrier signal selection signal to the generator 36. As a consequence, the generator 36 generates a carrier signal with an angular velocity that is a function of the power measured. For example, the selected value of the angular velocity is ω₁, which corresponds to a frequency of (ω₁/2π). The terminal 2, 3 transmits signalling data to the base station to inform it of the use of this frequency (ω₁/2π). After the interchange between the terminal 2, 3 and the base station 1 of the signalling data necessary for setting up the call, information channels are established for subscriber traffic and power control between the base station 1 and the terminal 2, 3, these channels being CDMA spread spectrum channels transported by the carrier frequency (ω₁/2π). According to the invention, a communications channel which is set up between a terminal and the base station 1 is implemented through a selection of an uplink carrier signal, from at least a group of two uplink carrier signals, for transmitting data from the terminal to the base station 1, as a function of the power in the signal received by this terminal from the base station.

With reference to figure 4, the reception unit of the base station 1 comprises duplicated radio and signal processing resources, i.e. two reception filters 19, 19'; two demodulation multipliers 20, 20'; two automatic gain control devices 21, 21'; (2 x N) = 6 sets of M = 3 spread spectrum despreaders 22, 23, 24 and 22', 23', 24' and two spread spectrum despreaders 25. On the other hand, the reception unit of the base station 1 comprises a channel allocator 26 and a signalling control unit 40 which in turn is connected to the block 41 which corresponds to the transmission part of the base station, having a structure substantially analogue to that of the reception part.

During a call set-up process, the terminal 2, 3 transmits within the call set-up data, those data relative to the CDMA code identification and the uplink frequency (ω₁/2π) or (ω₃/2π) which is used for this call; said data depending on the power measured by the terminal 2, 3. The signalling data sent by terminal 2, 3 are received by the base station 1 either through the reception filter 19, the demodulation multiplier 20, the automatic gain control device 21 and the spread spectrum despreaders 25, or through the reception filter 19', the demodulation multiplier 20', the automatic gain control device 21' and the spread spectrum despreader 25', as a function of the frequency selected by the terminal 2, 3. The signalling data d4 and d4' are received by the unit 40 that controls the channel allocator 26, which selects at its output the subscriber traffic and power control signals as a function of control data generated by the control unit 40. The result according to the invention is that the two uplink carriers, which coexist, reduce the "near-far" effect known in state of the art systems. The terminals that receive with a power level between P₀ and P₁ the signals transmitted by the base station 1 do not interfere with the terminals that receive with a power between P₁ and P₂ the signals transmitted by the base station 1. Although the invention has been described for the case of two carrier signals, it could be used for any number L of carrier signals, the table 33 establishing the following correspondences:
- from P₀ to P₁ → ω₁,
- from P₁ to P₂ → ω₃,
   .........
- from P_{(L-1)} to P_{L} → ω_{(M-1)}.

In addition, the receiver of the base station comprises multiple resources as a function of the number of carrier signals. Although in the above description it is the terminal that selects the communications channel, it could be the base station, which does it as a function of power measurement data of the terminal.

### SECOND ALTERNATIVE - TDMA/CDMA SYSTEM

In the above description, the problem of "Near-Far Interference" is avoided with the selection of a carrier signal as a function of the power measured. According to another alternative of the present invention, it is proposed to select an uplink time slot, from a group of at least two time slots of an uplink frame, for transporting data relative to said communication from said terminal 2, 3 to said base station 1, as a function of the power of a signal received by the terminal from said base station 1. According to this alternative, the TDMA/CDMA system is of the type described in the patent US-A-5.260.967, incorporated in the present application by reference. With reference to figure 6, the transmitter of the base station is distinguished from the transmitter of figure 2 by having a time multiplexer 42 instead of an adder 14, as appears in figure 1 of the patent US-A-5.260.967. With reference to figure 7, the terminal employed in this alternative is distinguished from the terminal of figure 5 in that it comprises a management unit for time slot synchronisation 43 instead of the generator 36, and a device for power measurement and time slot selection 32' instead of the device for power measurement and carrier selection 32. The management unit for time slot synchronisation 43 receives the outputs from the set of spread spectrum spreaders 38 and is synchronised by a synchronisation signal (for example, a pilot signal) received from the base station. In addition to the subscriber traffic and synchronisation slots in the frame as described in the patent US-A-5.260.967, (M-1) time slots of the TDMA/CDMA frame transport the signalling data.

Table 33 establishes the following correspondences:
- from P₀ to P₁ → T₁ and T_{1'},
- from P₁ to P₂ → T₂ and T_{2'},
   .........
- from P_{(L-1)} to P_{L} → T_{(M-1)} and T_{(M-1)}'.
where P₀, P₁ and P₂ are increasing power values and T₁, T₂, ..., T_{(M-1)} (for subscriber traffic) and T_{1'}, T_{2'}, ..., T_{(M-1)}, (for signalling) are time slots in the uplink frame.

With reference to figure 7, the device for power measurement and channel selection 32' measures the power of a signal, carrier or pilot, received from the base station 1. As a function of the power measured by the device 32', and of the time slots that correspond to this value of power measured in the table 33, the device 32' applies a time slot selection signal to the management unit for time slot synchronisation 43. The terminal informs the base station, in a first time slot selected from the TDMA/CDMA frame that transports the signalling data, for example T_{2'}, that is going to use the corresponding selected time slot T₂ for transmitting the subscriber traffic. The unit 43 includes a buffer which stores the output subscriber traffic from the set of spread spectrum spreaders 38 and that sends said data during the selected time slot T₂.

It results from the two alternatives described in the present application that signals received by the base station with very different respective powers never interfere with each other.

Although in the two alternatives described, it is the terminal that selects the resource, time slot or carrier signal, the invention is not limited to this solution and it can be the base station that selects this resource as a function of the power measured by the terminal. In this latter case, the terminal sends the data of the power measured to the base station that selects the time slot or the carrier signal. The base station can, in particular cases, choose a resource different to the resource associated with the power measured by taking into account the resources that are available, etc. Nevertheless, the solution of selection by the terminal avoids any disturbance to the other communications because, from the outset, the terminal sends its data by using the most appropriate resource.

In the two alternatives described above, the signal that is measured by the terminal to select a resource (time slot, carrier signal) can be a carrier signal, a pilot signal or any other signal.

Although the invention is described in relation to specific alternatives, modifications or changes will appear clear to a skilled man taking into account the state of the art. Consequently, it is understood that the present invention encompasses all these modifications or changes in the spirit of the scope of the claims.

## Claims

1. Method for selection of a communications channel for setting up a communication between a terminal (2, 3) and a base station (1) of a Time and Code Division Multiple Access (TDMA/CDMA) system, characterised by a selection stage of a time slot among a group of at least two time slots of an uplink frame, for transporting data relative to said communication from said terminal (2, 3) to said base station (1), as a function of the power of a signal received by said terminal (2, 3) from said base station (1).

2. Terminal for carrying out the method according to claim 1, characterised in that it comprises:
- means (32') for measuring the power of a signal received from said base station (1), and
- means (32', 33) for selecting a time slot for transmitting data as a function of the power measured in the carrier signal received from said base station (1).

3. Base station for carrying out the method according to claim 1, characterised in that it comprises:
- means for receiving a value measured by the terminal of a signal received from said base station (1), and
- means for selecting a time slot for the transmission of data by the terminal as a function of the power measured by the terminal of the signal received from said base station (1).

4. Method for selection of a communications channel for setting up a communication between a terminal (2, 3) and a base station (1) of a Code Division Multiple Access (CDMA) system, characterised by a selection stage of an uplink carrier signal among a group of at least two uplink carrier signals, for transporting data relative to said communication from said terminal (2, 3) to said base station (1), as a function of the power of a signal received by said terminal (2, 3) from said base station (1).

5. Method according to claim 4, characterised by a stage of transmission from the terminal (2, 3) to said base station (1) on the selected carrier signal of signalling data for setting up a call.

6. Base station for carrying out the method according to claim 4, characterised in that it comprises:
- means for receiving a value measured by the terminal of a signal received from said base station (1), and
- means for selecting a carrier signal for the transmission of data by the terminal, as a function of the power measured by the terminal of the signal received from said base station (1).

7. Terminal for carrying out the method according to claim 4, characterised in that it comprises:
- means (32) for measuring the power of a signal received from said base station (1),
- means (32, 33) for selecting an uplink carrier signal as a function of the power measured of the carrier signal received from said base station (1), and
- means (36, 37) for transmitting to the base station and on the selected carrier signal the signalling data for setting up the call.

8. Terminal according to claim 7, characterised in that said means (32, 33) for selecting comprise a table (33) which associates with each carrier signal a power range, respectively, from a plurality of power ranges.

9. Base station (1) for carrying out the method according to claim 4, characterised in that it comprises duplicate radio resources (19, 20, 21; 19', 20', 21') and signal processing resources (22, 23, 24, 25; 22', 23', 24', 25') for processing signals received on each of the uplink carrier signals, and means (40, 26) for selecting the outputs of spread spectrum despreaders (22, 23, 24; 22', 23', 24') forming part of the signal processing resources as a function of signalling data for call set-up received from the terminal (2, 3).

10. Base station (1) according to claim 9, characterised in that the means for selection (40, 26) comprise a control unit (40) that receives, through CDMA code spread spectrum despreaders (25, 25'), the signalling data sent by different terminals (2, 3) on the different uplink carrier signals, respectively, and a channel allocator (26) controlled by said control unit (40) that selects outputs of spread spectrum despreaders (22, 23, 24; 22', 23', 24') of CDMA code modulated subscriber traffic signals that are received on all uplink carrier signals, as a function of the signalling data.
